# EUROPÄISCHE PATENTSCHRIFT

(11) **EP 4 554 998 B1**
(45) Veröffentlichungstag und Bekanntmachung des Hinweises auf die Patenterteilung: **03.06.2026**
(21) Anmeldenummer: 23739280.8
(22) Anmeldetag: 10.07.2023
(51) Int. Cl.: C08G 18/22, C08G 18/28, C08G 18/48, C08G 18/71, C09D 175/08, C09J 175/08

(54) **VERFAHREN ZUR HERSTELLUNG SILANTERMINIERTER POLYMERE**
METHOD FOR THE PRODUCTION OF SILANE-TERMINATED POLYMERS
PROCÉDÉ DE PRODUCTION DE POLYMÈRES À TERMINAISON SILANE

(30) Priorität: 11.07.2022 EP 22184200
(43) Veröffentlichungstag der Anmeldung: 21.05.2025
(73) Patentinhaber: MERZ + BENTELI AG, 3172 Niederwangen (CH)
(72) Erfinder: HUBER, Stefan, 4900 Langenthal (CH); BURKHARDT, Fritz, 3414 Oberburg (CH); LERF, Claude, 3280 Meyriez (CH); ZUBER, Thomas, 3113 Rubigen (CH)
(74) Vertreter: Schaad, Balass, Menzl & Partner AG
(86) Internationale Anmeldenummer: PCT/EP2023/068966
(87) Internationale Veröffentlichungsnummer: WO 2024/013051

(56) Entgegenhaltungen:
- US-B2- 8 809 479
- US-B2- 9 932 437

## Beschreibung

Die vorliegende Erfindung betrifft ein Verfahren zur Herstellung von silanterminierten Polymeren, die in Dicht-, Kleb- sowie Beschichtungsstoffen eingesetzt werden können und für einen langen Zeitraum lagerstabil sind.

Die silanterminierten Polymere werden nach bekannten Methoden hergestellt. Ein bekanntes Verfahren umfasst beispielsweise die Umsetzung von Polyolen, insbesondere von hydroxylterminierten Polyethern, Polyurethanen oder Polyestern wie auch von hydroxylfunktionellen Polyacrylaten mit Isocyanatoalkylalkoxysilanen.

Eine weitere Methode sieht eine Reaktion der oben genannten Polyole mit Di- oder Polyisocyanaten vor, wobei letztere im Überschuss eingesetzt werden, so dass in diesem ersten Reaktionsschritt isocyanatfunktionelle Polymere erzeugt werden, die dann in einem zweiten Reaktionsschritt mit Alkoxysilanen umgesetzt werden, die über eine alkylgebundene isocyanatreaktive Gruppe verfügen.

Die Reaktion von hydroxylfunktionellen Polymeren mit Isocyanaten wird in Gegenwart von zusätzlichen Katalysatoren durchgeführt, da in dem entsprechenden Reaktionsschritt nur so hinreichend hohe Reaktionsgeschwindigkeiten für eine wirtschaftliche Herstellung der alkoxysilanterminierten Polymere erreicht werden können.

Die Verwendung von Bismutkatalysatoren, wie sie z.B. in EP1535940 beschrieben ist, führt zu einer katalytischen Aktivität und damit zur Beschleunigung der Umsetzung von Isocyanatsilanen mit dem hydroxyterminierten Polyol. Aber selbst mit relativ hohen Katalysatormengen sind lange Reaktionszeiten erforderlich, um eine vollständige Umsetzung zu erreichen. Zudem führen hohe Katalysatormengen eher zu unerwünschten Nebenreaktion bei der Synthese und reduzieren die Lagerstabilität der Endprodukte.

US 9 932 437 B2 und US 8 809 479 B2 offenbaren eine feuchtigkeitshärtbare Harzzusammensetzung mit einem niedrigen Gehalt an flüchtigen organischen Stoffen. Diese wird durch die Umsetzung eines feuchtigkeitshärtbaren Polymers mit einer hydrolysierbaren Silylgruppe und einem reaktiven Modifizierungsmittel erhalten.

Aufgabe der vorliegenden Erfindung ist es, ein Verfahren zur Herstellung eines silanterminierten Polymers bereitzustellen, das eine schnelle, aber vollständige Umsetzung erlaubt.

Die Aufgabe wird durch das erfindungsgemässe Verfahren gelöst. Bevorzugte Ausführungsformen sind Gegenstand der abhängigen Ansprüche.

Überraschenderweise wurde festgestellt, dass durch das erfindungsgemässe Verfahren ein silanterminiertes Polymer der Formel (I) oder der Formel (VI) 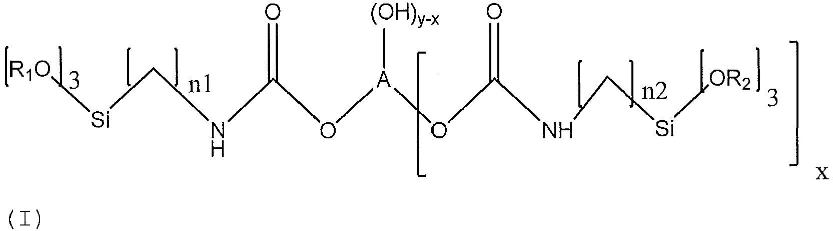 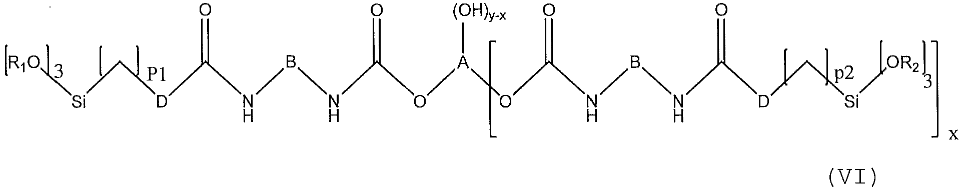 sehr effizient hergestellt werden kann. Die erfindungsgemässe Katalysatormischung führt zu einer massiven Verkürzung der Reaktionszeit. Die erfindungsgemässe Katalysatormischung ist deutlich effektiver als reine Bismuthkatalysatoren oder Katalysatormischungen mit Bismuth- und Zinkkatalysatoren. Dadurch kann zum einen die Effizienz erhöht werden, zum anderen wird der Energieverbrauch signifikant gesenkt, was ökonomisch und ökologisch von hoher Relevanz ist. Interessanterweise kann der Cobaltkatalysator der Katalysatormischung aber nicht durch einen Zinkkatalysator ersetzt werden, da dieser die Reaktion nicht ausreichend zu beschleunigen vermag.

Erfindungsgemäss wird das silanterminierte Polymer der Formel (I) durch Umsetzung von einem hydroxyterminierten organischen Polymer der Formel (II) 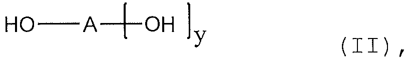 mit wenigstens einem Isocyanat der allgemeinen Formel (III)

(RO)₃-Si-(CH₂)ₙ-N=C=O (III)

oder
mit einem multifunktionellen Isocyanat der Formel (IV)

B-(N=C=O)ₘ (IV)

und anschliessender Reaktion mit einem Alkoxysilan der Formel (V)

(RO)₃Si-(CH₂)ₚ-D₁ (V)

erhalten. Die Umsetzung erfolgt in Gegenwart einer Katalysatormischung, die nachfolgend erläutert wird. In den Verbindungen der allgemeinen Formeln I steht
A für ein Polyether-Rückgrat,
x und y für natürliche Zahlen zwischen 1 und 10, wobei y grösser oder gleich x sein muss,
n, n₁ und n₂ für 1 oder 3
p , p₁ undp₂ für eine natürliche Zahl zwischen 1 und 5,
m für eine natürliche Zahl zwischen 2 und 10
R, R₁ und R₂ für Methyl oder Ethyl,
B für einen linearen, verzweigten oder cyclischen organischen Rest, der keine gegenüber Isocyanat reaktiven Gruppen enthält, wobei m grösser als 1 ist,
D ausgewählt ist aus der Gruppe bestehend aus NH, NR₃ und S,
D₁ eine mit der Isocyanat-Gruppe reagierende reaktive Gruppe ausgewählt aus der Gruppe bestehend aus NH₂, NHR₃ und SH, ist, und
R₃ ein linearer, verzweigter oder cyclischer Kohlenwasserstoffrest mit 1 bis 10 Kohlenstoffatomen darstellt, welcher wahlweise ein oder mehrere Heteroatome ausgewählt aus der Gruppe bestehend aus Sauerstoff, Schwefel und Stickstoff umfassen kann.

Beim erfindungsgemässen Verfahren können ein oder zwei verschiedene Isocyanate der allgemeinen Formel (III) eingesetzt werden. Wenn nur ein Isocyanat eingesetzt wird, sind R₁ und R₂ im silanterminierten Polymer der Formel (I) oder der Formel (VI) identisch und entsprechen R in der allgemeinen Formel (III). Wenn zwei verschiedene Isocyanate der allgemeinen Formel (III) eingesetzt werden, entspricht R₁ dem Rest R des ersten Isocyanats der allgemeinen Formel (III) und R₂ dem Rest R des zweiten Isocyanats der allgemeinen Formel (III). Gleiches gilt für n und p.

In einer Ausführungsform der vorliegenden Erfindung sind R₁ und R₂ sowie n₁ und n₂ gleich. Solche Polymere können sehr einfach erhalten werden, indem nur ein Isocyanat der allgemeinen Formel (III) bei der Synthese eingesetzt wird.

In einer weiteren Ausführungsform sind R₁ und R₂ oder n₁ und n₂ oder R₁, R₂, n₁ und n₂ verschieden voreinander. Solche Polymere werden durch Mischungen von verschiedenen Isocyanaten der allgemeinen Formel (III) erhalten. Durch diese Mischung kann die Reaktivität der silanterminierten Polymere gesteuert werden. Reine Trimethoxysilan-terminerte Polymere vernetzen schnell, reine Triethoxysilan-terminierte Polymere reagieren langsam. Durch verschiedene Mischverhältnisse kann entsprechend die Reaktivität individuell eingestellt werden.

Die Katalysatormischung enthält einen Bismuth- und einen Cobaltkatalysator, wobei der Gehalt des Cobaltkatalysators mindestens 2 ppm bezogen auf das hydroxyterminierte organische Polymer der Formel (II) beträgt.

Im Zusammenhang mit der vorliegenden Erfindung wird der Katalysatorgehalt in ppm angegeben. Die Angaben beziehen sich auf die im Katalysator enthaltenen Metalle, d.h. mg des Metalls pro kg des hydroxyterminierte organischen Polymer. Die Anionen des Katalysators werden bei der Bestimmung des Gehalts nicht einbezogen.

Unter einer vollständigen Umsetzung wird innerhalb der vorliegenden Erfindung verstanden, dass mindestens 95 Gew.-%, vorzugsweise 98 Gew.-% der OH-Gruppen des Polymerrückgrates mit dem Isocyanat der allgemeinen Formel III oder IV reagiert haben.

In einer Ausführungsform enthält die Katalysatormischung keinen weiteren Katalysator, d.h., sie besteht aus einem Bismuth- und einem Cobaltkatalysator.

Vorzugsweise beträgt der Gehalt des Bismuthkatalysators der Katalysatormischung mindestens 10 ppm bezogen auf das hydroxyterminierte organische Polymer der Formel (II). Es konnte gezeigt werden, dass eine Kombination mit wenigstens 2 ppm des Cobaltkatalysators und wenigstens 10 ppm des Bismuthkatalysators zu sehr kurzen Umsetzungszeiten führte. Vorzugsweise wird die Reaktionszeit um 50%, besonders bevorzugt um 65% gesenkt. Die Herstellung des silanterminierten Polymers kann kontinuierlich oder diskontinuierlich erfolgen.

In einer Ausführungsform betrifft das silanterminierte Polymer ein lineares Polymer der allgemeinen Formel IA 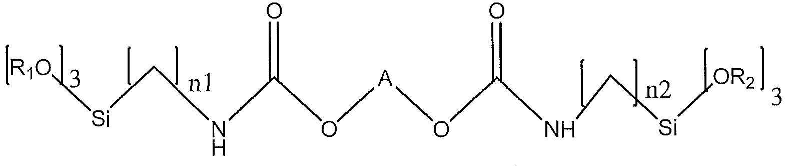 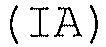 wobei R₁, R₂, n₁, n₂ und A die gleiche Definition wie oben haben. R₁ und R₂ sowie n₁ und n₂ sind identisch, wenn nur ein Isocyanat der allgemeinen Formel (III) eingesetzt wird. Wenn zwei verschiedene Isocyanate der allgemeinen Formel (III) eingesetzt werden, sind R₁ und R₂ oder n₁ und n₂ oder R₁, R₂, n₁ und n₂ voneinander verschieden, wobei eine statistische Verteilung aus Polymeren mit R₁-A-R₁, R₁-A-R₂ und R₂-A-R₂ entsteht. Eine bevorzugte Ausführungsform betrifft das lineare Polymer der allgemeinen Formel IB 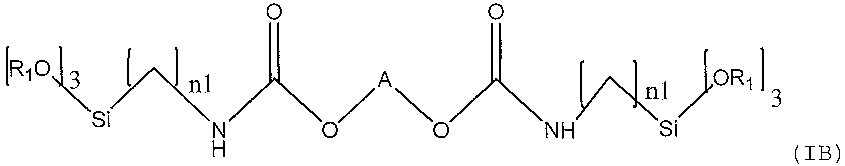 bei dessen Herstellung nur ein Isocyanat der allgemeinen Formel (III) eingesetzt wird.

Lineare silanterminierte Polymere der Formel (IB)werden besonders bevorzugt für Dicht- und Beschichtungsstoffe verwendet, bei welchen eine höhere Elastizität benötigt wird, wie beispielsweise für Fugenmassen, elastische Klebstoffe, Flächenabdichtungen oder im Marinebereich beispielsweise für das Verfugen von Teak. Solche lineare Polymere werden nach der Aushärtung weicher und elastischer, die nachfolgend beschriebenen verzweigten Polymere aufgrund der höheren Vernetzungsdichte härter und weniger elastisch.

In einer zweiten Ausführungsform betrifft das silanterminierte Polymer ein verzweigtes Polymer der allgemeinen Formel IC 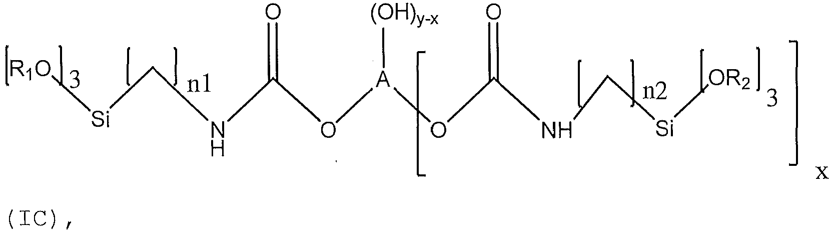 wobei R₁, R₂, n₁ und n₂ und A die gleiche Definition wie oben haben und x und y natürliche Zahlen zwischen 2 und 10 sind. Der Gehalt des Isocyanats der Formel III kann bezogen auf die OH-Gruppen variiert werden. Abhängig von der gewünschten Anzahl von freien OH-Gruppen werden vorzugsweise 90 mol% bis 130 mol% des Isocyanats der Formel III eingesetzt. Vorzugsweise ist das silanterminierte Polymer der Formel IC im Wesentlichen frei von freien OH-Gruppen, d.h. y und x sind im Wesentlichen identisch und die Differenz von y-x ist demnach etwa 0. Verzweigte silanterminierte Polymere der Formel IC werden insbesondere bevorzugt für Kleb-, Dicht- und Beschichtungsmassen verwendet, bei denen eine höhere Shore A Härte und eine höhere Vernetzungsdichte benötigt wird, wie beispielsweise bei hochmoduligen Klebstoffen, Flächenabdichtungen oder Bodenbeschichtungen.Das erfindungsgmässe Katalysatorgemisch hat keinen negativen Einfluss auf die Lagerstabilität der daraus hergestellten Kleb-, Dicht- und Beschichtungsstoffe und muss daher nicht aufwändig aus dem Polymer entfernt werden. Um Verfärbungen nach längerer Lagerzeit zu verhindern, kann wahlweise ein Desaktivator oder ein Komplexbildner zugegeben werden.

Das hydroxyterminierte organische Polymer der Formel 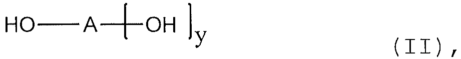 hat vorzugsweise ein Polyether-Rückgrat A, das Alkylenoxid-Repetiereinheiten mit 2 bis 6 Kohlenstoffatomen enthält, wobei 2 und 3 Kohlenstoffatome, d.h. Propylenoxid und Ethylenoxid, bevorzugt sind, oder Kombinationen davon enthält. Das hydroxyterminierte organische Polymer kann ein Homopolymer oder ein Copolymer aus verschiedenen Polyethereinheiten sein.

Unter dem Ausdruck «Copolymere davon» werden Polymere verstanden, die aus zwei oder mehr Monomereinheiten zusammengesetzt sind. Der Ausdruck beinhaltet nebst alternierenden Copolymeren und Pfropfcopolymeren insbesondere auch Blockpolymere, die aus längeren Sequenzen oder Blöcken jedes Monomers bestehen und über Linkerverbindungen miteinander verknüpft sein können. Solche Copolymere können beispielsweise aromatischen Glycol-Kettenverlängerer enthalten mit einer Gesamtzahl von Kohlenstoffatomen von 6 bis 16 und vorzugsweise 6 bis 12. Beispiele für geeignete Glycol-Kettenverlängerer sind Benzolglycol und Xylylolglycole, bei denen es sich um ein Gemisch von 1,4- Di(hydroxymethyl)benzol und 1,2-Di(hydroxymethyl)benzol handelt. Benzolglycol ist bevorzugt und umfasst insbesondere Hydrochinon, d.h. der Bis(beta-hydroxyethyl)ether, der auch als 1,4-Di(2-hydroxyethoxy)benzol bekannt ist, Resorcin, d.h. der Bis(beta-hydroxyethyl)ether, der auch als 1,3-Di(2-hydroxyethyl)benzol bekannt ist, Brenzcatechin, d.h. der Bis(beta-hydroxyethyl)ether, das auch als 1,2-Di(2-hydroxyethyl)benzol bekannt ist, und Kombinationen davon.

Der Ausdruck hydroxyterminiert steht für Polymere, die am Molekülende freie Hydroxygruppen tragen. y ist eine natürliche Zahl von 1 bis 10. In einer bevorzugten Ausführungsform ist y = 1 und entspricht dann einem α,ω-dihydroxyterminierten organischen Polymer, d.h. einem Polymer mit zwei terminalen OH-Gruppen. Wenn y grösser als 1 ist, weist das hydroxyterminierte Polyol mehr als zwei terminale OH-Gruppen auf, d.h. es handelt sich um ein Polyol, dessen OH-Gruppen dazu bestimmt sind, mit dem Isocyanat der Formel III zu reagieren. Im Falle von verzweigten hydroxyterminierten Polymeren sind die OH-Gruppen vorzugsweise nicht unmittelbar am Polymer-Rücken, sondern am Ende von Seitenketten des Polymer-Rückens angebracht. Sie können beispielsweise durch Umsetzungen mit Polyolen erhalten werden. Sowohl lineare als auch verzweigte hydroxyterminierte organische Polymere sind dem Fachmann bekannt und auch kommerziell erhältlich.

Beispiele für mögliche hydroxyterminierte Polymere mit einem Polyether-Polymerrücken sind Acclaim^{®} 4200, Acclaim^{®} 6300, Acclaim^{®} 8200, Acclaim^{®} 12200 und Acclaim^{®} 18200 (oder der entsprechende Typ Acclaim^{®} xx00N) der Covestro AG PREMINOL S 1004F, PREMINOL S 4013F, PREMINOL S 4318F, PREMINOL S 3011, PREMINOL 5001F, PREMINOL 7001K, PREMINOL 7012 von AGC, Rokopol LDB Delta 12000, Rokopol LDB 18000D, Rokopol LDB 12000D, ROKAmer PPG 4000, Rokopol LDB8000D von PCC Group, Voranol 3008, Voranol 3010, Voranol 3022J, Voranol 3136, Voranol 4000LM, Voranol 4053, Voranol 8000LM von DOW.

Vorzugsweise ist das hydroxyterminierte organische Polymer bei Raumtemperatur flüssig. Darunter wird eine Viskosität bei 20°C von 1 bis 10⁶ mPa*s verstanden. Diese Viskosität ist optimal für die Handhabung der erfindungsgemässen Zusammensetzung, insbesondere bei der Herstellung von Dichtmassenzubereitungen.

Vorzugsweise weist das hydroxyterminierte organische Polymer ein mittleres Molekulargewicht von 1'000-50'000g/mol, insbesondere 2'000-25'000g/mol auf, da die Handhabung dieser Polymere optimal ist, wobei gegebenenfalls ein Weichmacher zugegeben wird, um die Verarbeitbarkeit zu verbessern. Geeignete Weichmacher sind dem Fachmann bekannt. Bevorzugte Weichmacher sind beispielsweise Alkansulfonsäurephenylester wie Mesamoll von Lanxess, Cyclohexanoat-Weichmacher wie Elatur DINCD von Evonik, 1,2-Cyclohexandicarbonsäurediisononylester wie Hexamoll DINCH von BASF, Kohlenwasserstoffe wie beispielsweise Shellsol D100 von Shell und Diester von Dicarbonsäuren wie Dioctylsebacat, Dioctyladipat oder Dioctylazalat. Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mn einer polydispersen Mischung von oligomeren oder polymeren Molekülen bezeichnet, welches üblicherweise mittels Titration der Säure- und OH-Zahl bestimmt wird. Alternativ kann sie auch mit analytischen Methoden wie GPC/MALDI bestimmt werden. Die OH-Zahl (Hydroxylzahl) ist ein Mass für den Gehalt an Hydroxygruppen in Polymeren und ist eine dem Fachmann bekannte Grösse. Die Säurezahl ist ein Mass für den Gehalt an Säuregruppen in Polymeren und ist eine dem Fachmann bekannte Grösse.

Die erfindungsgemäss eingesetzten hydroxyterminierten organischen Polymere der Formel (II) können handelsübliche Verbindungen sein, welche zur besseren Handhabung gegebenfalls mit einem Weichmacher oder Lösungsmittel verdünnt sein können.

In einer bevorzugten Ausführungsform der vorliegenden Erfindung erfolgt die Umsetzung mit einem Isocyanat ausgewählt aus der Gruppe bestehend aus 3-Isocyanatopropyltrimethoxysilan und 3-Isocyanatopropyltriethoxysilan oder Mischungen davon. Wie in den nachfolgenden Beispielen gezeigt wird, können diese beiden Silane sehr effektiv mit dem Katalysatorgemisch der vorliegenden Erfindung umgesetzt werden. Beim reaktionsträgeren Isocyanatopropyltriethoxysilane beträgt der Cobaltkatalysatorgehalt vorzugsweise mehr als 4ppm, besonders bevorzugt mehr als 5ppm, um eine sehr schnelle Umsetzung zu erhalten.

Der Cobaltkatalysator ist vorzugsweise ausgewählt aus der Gruppe bestehend aus Cobalt(II) hexafluoroacetylacetonat, Cobalt(II) benzoat, Cobalt(II) isopropoxid, Cobalt(II) acetylacetonat bzw. Cobalt(II) 2,4-pentandionat, Cobalt(II) oxalat, Cobalt(II) citrat, Cobalt(II) hydroxid, Cobalt(II) acetat, Cobalt(II) stearat, Bis(2,2,6,6-tetramethyl-3,5-heptandionato)cobalt(II), Cobalt(II) oleat, Cobalt (II) 2-ethylhexanoat (kommerziell erhältlich als Octa-Soligen^{®} Cobalt 10 von Borchers), Cobalt (II) naphthenat (kommerziell erhältlich als 6% Cobalt Nap-All^{®} von Borchers), Cobalt (II) neodecanoat (kommerziell erhältlich als Borchers^{®} Deca Cobalt 10 von Borchers) und Cobalt(II) resinat, wobei Cobalt (II) neodecanoat besonders bevorzugt ist.

Der Bismuthkatalysator ist vorzugsweise ausgewählt aus der Gruppe bestehend aus Bismuth(III) isopropoxid, Bismuth(III) tert-pentoxid, Bismuth(III) oleat, Bismuth(III) 2-ethylhexanoate (kommerziell erhältlich als Borchi^{®} Kat 320 von Borchers), Bismuth(III) neodecanoat (kommerziell erhältlich als Borchi^{®} Kat 315 von Borchers) und Bismuth(III) acetylacetanoat, wobei Bismuth(III) neodecanoat besonders bevorzugt ist.

Das Katalysatorgemisch wird bevorzugt in einer Gesamtmenge von 8 bis 500 ppm zugegeben, besonders bevorzugt 8 bis 100 ppm und ganz besonders bevorzugt 10 bis 50 ppm.

Die Katalysatoren können sowohl vor der Reaktion zu einem Gemisch verrührt und der Reaktionsmischung zugegeben werden oder auch direkt im Präpolymer gemischt werden. Vorzugsweise wird das Katalysatorgemisch vor der Verwendung frisch hergestellt, da so die beste Reaktivität erreicht wird. Es wurde auch festgestellt, dass das Katalysatorgemisch besser löslich ist, wenn das Isocyanat bei der Zugabe des Katalysatorgemischs bereits im Reaktor enthalten ist.

Bei farblosen Endprodukten ist ein Cobaltkatalysatorgehalt von 2 bis 5 ppm bevorzugt, da es ansonsten zu einer Verfärbung des Produktes führen kann.

Besonders bevorzugt sind die linearen silanterminierten Polymere ausgewählt aus der Gruppe bestehend aus

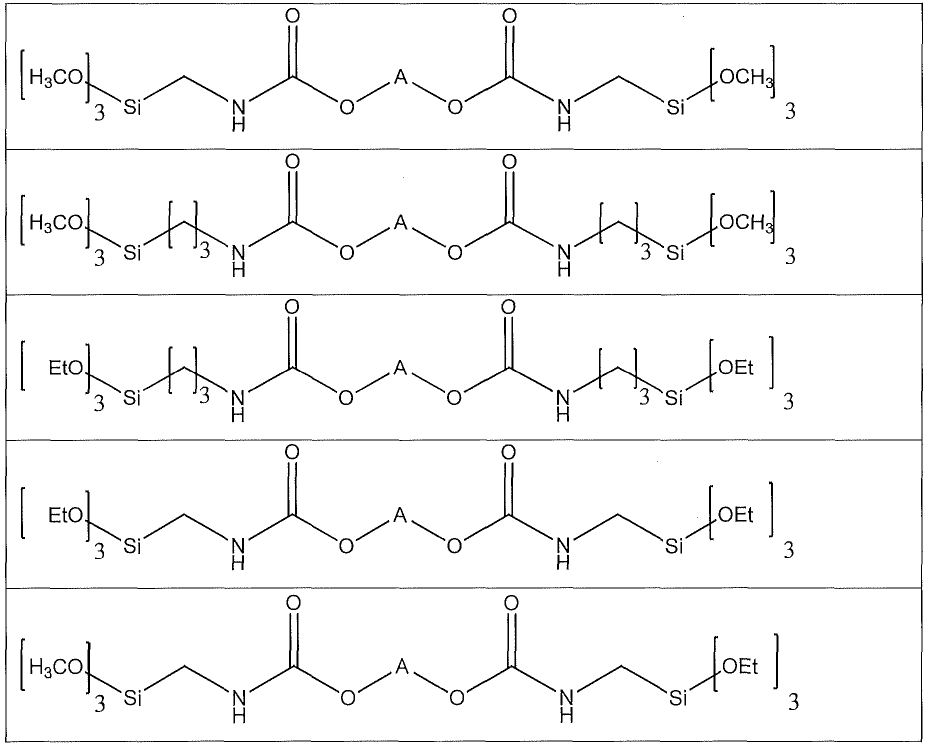

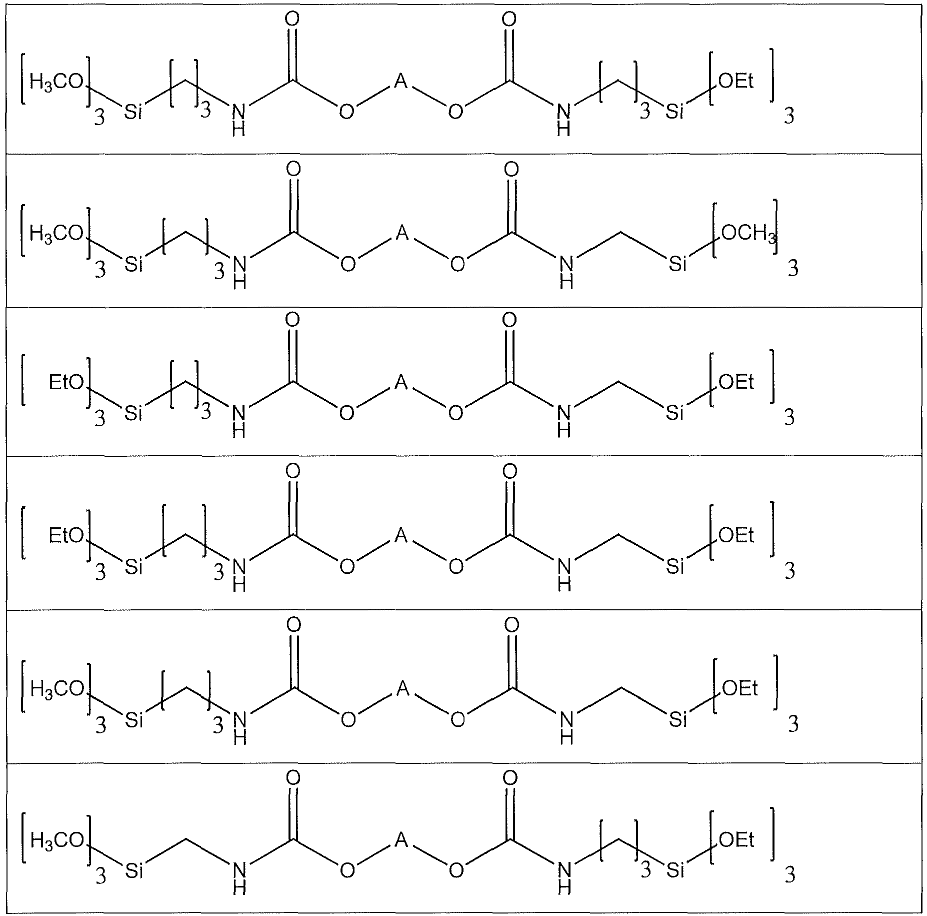

wobei A ein Polymerrückgrat gemäss der obigen Definition darstellt. Es wurde festgestellt, dass diese linearen silanterminierten Polymere durch das erfindungsgemässe Katalysatorgemisch besonders effektiv hergestellt werden können.

Das erfindungsgemässe Verfahren zur Herstellung des silanterminierten Polymers der Formel (VI) erfolgt durch Umsetzung von einem hydroxyterminierten organischen Polymer der Formel (II) 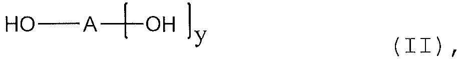 mit einem multifunktionellen Isocyanat der Formel (IV)
B-(N=C=O)ₘ (IV),und anschliessender Reaktion mit einem Alkoxysilan der Formel (V)

(RO)₃Si-(CH₂)ₚ-D (V)

in Gegenwart des erfindungsgemässen Katalysatorgemischs.

Als multifunktionelle Isocyanate der Formel (IV) eignen sich insbesondere Isocyanate mit zwei oder mehr, bevorzugt 2 bis 10, Isocyanatgruppen im Molekül. Hierfür kommen die bekannten aliphatischen, cycloaliphatischen, aromatischen, oligomeren und polymeren multifunktionellen Isocyanate in Betracht, wobei diese keine gegenüber Isocyanat reaktiven Gruppen enthalten, d.h. insbesondere keine freien primären und/oder sekundären Aminogruppen aufweisen. Ein Vertreter der aliphatischen multifunktionellen Isocyanate ist beispielsweise Hexamethylendiisocyanat (HDI); ein Vertreter der cycloaliphatischen multifunktionellen Isocyanate ist z. B. 1-Isocyanato-3- (isocyanatomethyl)-3, 5,5-trimethylcyclohexan (IPDI). Als Vertreter der aromatischen multifunktionellen Isocyanate seien genannt: 2,4- und 2,6-Diisocyanatotoluol sowie das entsprechende technische Isomerengemisch (TDI); Diphenylmethandiisocyanate, wie Diphenylmethan-4,4'-diisocyanat, Diphenylmethan-2, 4'-diisocyanat, Diphenylmethan-2,2'-diisocyanat sowie die entsprechenden technischen Isomerengemische (MDI). Ausserdem sind zu nennen Naphthalin-1,5-diisocyanat (NDI) sowie 4,4',4" Triisocyanatotriphenylmethan.Die Reaktion wird vorzugsweise bei Temperaturen zwischen 50°C und 150°C, besonders bevorzugt bei 60°C bis 120°C und vorzugsweise bei Normaldruck durchgeführt.

Die erfindungsgemäss hergestellten, vernetzbaren Zusammensetzungen eignen sich ausgezeichnet als Abdichtungsmassen für Fugen, einschliesslich senkrecht verlaufender Fugen, und ähnlichen Leerräumen, z.B. von Gebäuden, Land-, Wasser- und Luftfahrzeugen, oder als Klebstoffe, insbesondere zum Verbinden von Substraten mit unterschiedlichen thermischen Ausdehnungskoeffizienten z.B. im Fahrzeugbau, Fassadenbau oder Solaranwendungenoder Verkittungsmassen, z.B. im Fensterbau oder bei der Herstellung von Vitrinen, sowie zur Herstellung von Schutzüberzügen oder von gummielastischen Formkörpern sowie für die Isolierung von elektrischen oder elektronischen Vorrichtungen. Insbesondere geeignet sind die erfindungsgemässen Zusammensetzungen als Abdichtungsmassen für Fugen mit möglicher hoher Bewegungsaufnahme.

Für die Vernetzung der erfindungsgemässen Zusammensetzung reicht der übliche Wassergehalt der Luft aus. Die Vernetzung kann bei Raumtemperatur oder, falls erwünscht, auch bei höheren oder niedrigeren Temperaturen, z.B. bei -5 bis 10°C oder bei 30 bis 50°C, durchgeführt werden. Die Vernetzung wird bevorzugt bei Normaldruck durchgeführt.

Die erfindungsgemässen silanterminierten Polymere können auch als 2-Komponentensystem formuliert werden. Dabei enthält die zweite Komponente neben Hilfsstoffen auch Wasser, welches nach der Mischung mit der ersten Komponente die Tiefendurchhärtung stark beschleunigt. Entsprechende 2-Komponentensysteme sind dem Fachmann bekannt und sind beispielsweise in EP2009063 oder EP2535376 beschrieben, deren Inhalt durch Verweis einbezogen wird.

Die erfindungsgemässen Zubereitungen können noch weitere Hilfs- und Zusatzstoffe enthalten. Zu diesen Hilfs- und Zusatzstoffen gehören beispielsweise weitere silanterminierte Polymere, Weichmacher, Stabilisatoren, Antioxidantien, Füllstoffe, Reaktivverdünner, Trockenmittel, Haftvermittler und UV-Stabilisatoren, rheologische Hilfsmittel, Farbpigmente oder Farbpasten, Katalysatoren zur Vernetzung und/oder gegebenenfalls auch im geringen Umfang Lösungsmittel. Solche Hilfs- und Zusatzstoffe sind dem Fachmann bekannt.

### Beispiele

### Vergleichsbeispiele 1 bis 10 und erfindungsgemässe Beispiele 11-20

230g (11.65mmol, bestimmt über Titration der OH-Zahl) Acclaim Polyol 18200N werden in einen Reaktionskolben gegeben und 30min bei 80°C und 1mbar vorgetrocknet. Das Vakuum wird mit Stickstoff gebrochen. Innert 2 Minuten werden bei einer Rührgeschwindigkeit von 170rpm 5.09g (23.3mmol) 3-Isocyanatopropyltrimethoxysilan 94% langsam zugetropft. 2 Minuten nach vollständiger Zugabe des Isocyanatopropyltrimethoxysilans wird der Reaktionsmischung die Katalysatoren-Mischung (siehe Tabelle) gelöst in Diisononylphthalat zugegeben. Der Reaktionsfortschritt wurde mittels FTIR anhand der Zunahme der Absorption bei 1722cm-1 (C=O Absorption des Produktes) und der Abnahme der Absorption bei 2270cm-1 (NCO Absorption des Eduktes) bestimmt.

### TMS-NCO: 3-Isocyanatopropyltrimethoxysilane

| Beispiel | Bi [ppm] | Zn [ppm] | Co [ppm] | Reaktionsfortschritt nach 25min | Reaktionsfortschritt nach 60min | NCO-Silan |
|---|---|---|---|---|---|---|
| 1 | 16.42 | - | - | Nicht vollständig | Nicht vollständig | TMS-NCO |
| 2 | 27.01 | - | - | Nicht vollständig | Nicht vollständig | TMS-NCO |
| 3 | 31.65 | - | - | Nicht vollständig | Nicht vollständig | TMS-NCO |
| 4 | 42.46 | - | - | Nicht vollständig | Nicht vollständig | TMS-NCO |
| 5 | 56.47 | - | - | Nicht vollständig | vollständig | TMS-NCO |
| 6 | 24.9 | 2.6 | - | Nicht vollständig | Vollständig | TMS-NCO |
| 7 | - | - | 3.58 | Nicht vollständig | Nicht vollständig | TMS-NCO |
| 8 | - | - | 5.71 | Nicht vollständig | Nicht vollständig | TMS-NCO |
| 9 | - | - | 7.00 | Nicht vollständig | vollständig | TMS-NCO |
| 10 | 6.8 | - | 1.7 | Nicht vollständig | Nicht vollständig | TMS-NCO |
| 11 | 14.5 | - | 3.66 | vollständig | | TMS-NCO |
| 12 | 15.6 | - | 3.96 | vollständig | | TMS-NCO |
| 13 | 19.36 | - | 2.57 | vollständig | | TMS-NCO |
| 14 | 11.02 | - | 3.38 | vollständig | | TMS-NCO |
| 15 | 10.6 | - | 3.93 | Vollständig | | TMS-NCO |
| 16 | 10.91 | - | 4.89 | vollständig | | TMS-NCO |
| 17 | 20.36 | - | 3.47 | Vollständig | | TMS-NCO |
| 18 | 23.89 | - | 3.86 | vollständig | | TMS-NCO |
| 19 | 31.09 | - | 4.13 | vollständig | | TMS-NCO |
| 20 | 19.01 | - | 5.83 | Vollständig | | TMS-NCO |

### Vergleichsbeispiele 21 bis 26 und erfindungsgemässe Beispiele 27-29

230g (11.65mmol, bestimmt über Titration der OH-Zahl) Acclaim Polyol 18200N werden in einen Reaktionskolben gegeben und 30min bei 80°C und 1mbar vorgetrocknet. Das Vakuum wird mit Stickstoff gebrochen. Innert 2min werden bei einer Rührgeschwindigkeit von 170rpm 6.13g (23.3mmol) 3-Isocyanatopropyltriethoxysilane 94% langsam zugetropft. 2min nach vollständiger Zugabe des Silans wird der Reaktionsmischung die Katalysatoren-Mischung (siehe Tabelle) gelöst in Diisononylphthalat zugegeben. Der Reaktionsfortschritt wurde mittels FTIR anhand der Zunahme der Absorption bei 1722cm-1 (C=O Absorption des Produktes) und der Abnahme der Absorption bei 2270cm-1 (NCO Absorption des Eduktes) bestimmt.

### TES-NCO: 3-Isocyanatopropyltriethoxysilane

| Beispiel | Bi [ppm] | Zn [ppm] | Co [ppm] | Reaktionsfortschritt nach 25min | Reaktionsfortschritt nach 60min | NCO-Silan |
|---|---|---|---|---|---|---|
| 21 | 46.85 | - | - | Nicht vollständig | Nicht vollständig | TES-NCO |
| 22 | 65.97 | - | - | Nicht vollständig | vollständig | TES-NCO |
| 23 | 70.12 | - | - | Nicht vollständig | vollständig | TES-NCO |
| 24 | - | - | 4.28 | Nicht vollständig | Nicht vollständig | TES-NCO |
| 25 | - | - | 6.51 | Nicht vollständig | vollständig | TES-NCO |
| 26 | | | 8.86 | Nicht vollständig | vollständig | TES-NCO |
| 27 | 13.7 | - | 5.11 | vollständig | | TES-NCO |
| 28 | 12.03 | - | 4.48 | vollständig | | TES-NCO |
| 29 | 40.5 | - | 4.91 | vollständig | | TES-NCO |

## Patentansprüche

1. Verfahren zur Herstellung eines silanterminierten Polymers der Formel (I) oder (VI) 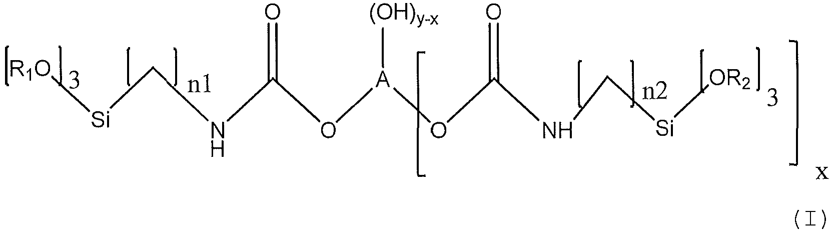 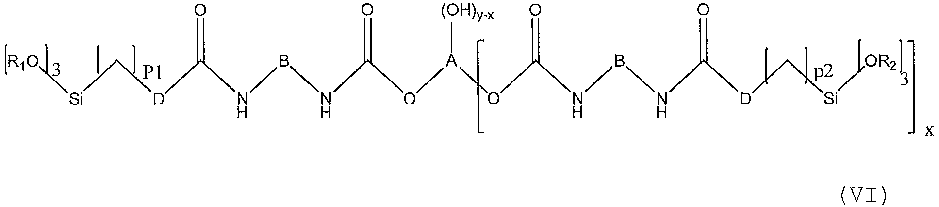 durch Umsetzung von einem hydroxyterminierten organischen Polymer der Formel (II) 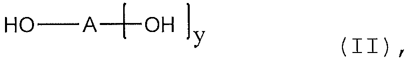 mit wenigstens einem Isocyanat der allgemeinen Formel (III)
(RO)₃-Si-(CH₂)ₙ-N=C=O (III)
oder
mit einem multifunktionellen Isocyanat der Formel (IV)
B-(N=C=O)ₘ (IV)
und anschliessender Reaktion mit einem Alkoxysilan der Formel (V)
(RO)₃Si-(CH₂)ₚ-D₁ (V)
in Gegenwart eines Katalysatorgemischs, wobei
A für ein Polyether-Rückgrat steht,
x und y natürliche Zahlen zwischen 1 und 10 sind, wobei
y grösser oder gleich x sein muss,
n, n₁ und n₂ 1 oder 3 sind,
p, p₁ und p₂ eine natürliche Zahl zwischen 1 und 5 sind,
m eine natürliche Zahl zwischen 2 und 10 ist, und
R, R₁ und R₂ Methyl oder Ethyl sind,
B ein linearer, verzweigter oder cyclischer organischer Rest ist, der keine gegenüber Isocyanat reaktiven Gruppen enthält, und m grösser als 1 ist,
D ausgewählt ist aus der Gruppe bestehend aus NH, NR₃ und S,
D₁ eine mit der Isocyanat-Gruppe reagierende reaktive Gruppe ausgewählt aus der Gruppe bestehend aus NH₂, NHR₃ und SH, ist, und
R₃ ein linearer, verzweigter oder cyclischer Kohlenwasserstoffrest mit 1 bis 10 Kohlenstoffatomen darstellt, welcher wahlweise ein oder mehrere Heteroatome ausgewählt aus der Gruppe bestehend aus Sauerstoff, Schwefel und Stickstoff umfassen kann,
**dadurch gekennzeichnet, dass** das Katalysatorgemisch einen Bismuth- und einem Cobaltkatalysator enthält, und wobei der Gehalt des Cobaltkatalysator mindestens 2 ppm bezogen auf das hydroxyterminierte organische Polymer der Formel (II) beträgt.

2. Verfahren gemäss Anspruch 1, **dadurch gekennzeichnet, dass** der Gehalt des Bismuthkatalysators mindestens 10 ppm bezogen auf das hydroxyterminierte organische Polymer der Formel (II) beträgt.

3. Verfahren gemäss einem der vorangehenden Ansprüche, **dadurch gekennzeichnet, dass** das silanterminierte Polymer ein lineares Polymer der allgemeinen Formel IA 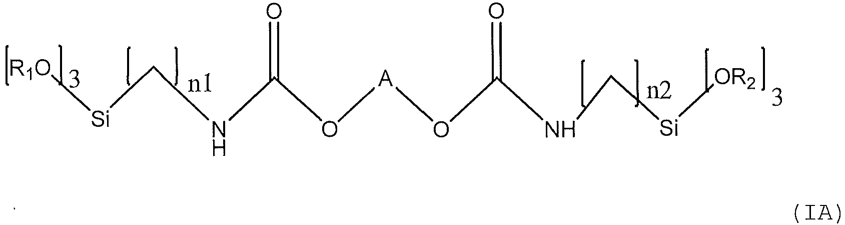 darstellt.

4. Verfahren gemäss einem der vorangehenden Ansprüche, **dadurch gekennzeichnet, dass** das silanterminierte Polymer ein lineares Polymer der allgemeinen Formel IB 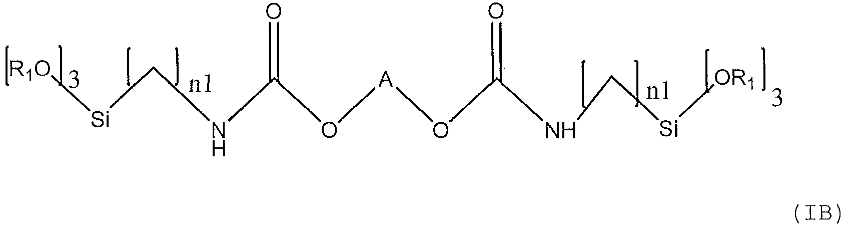 darstellt.

5. Verfahren gemäss einem der Ansprüche 3 oder 4, wobei die linearen silanterminierten Polymere ausgewählt sind aus der Gruppe bestehend aus 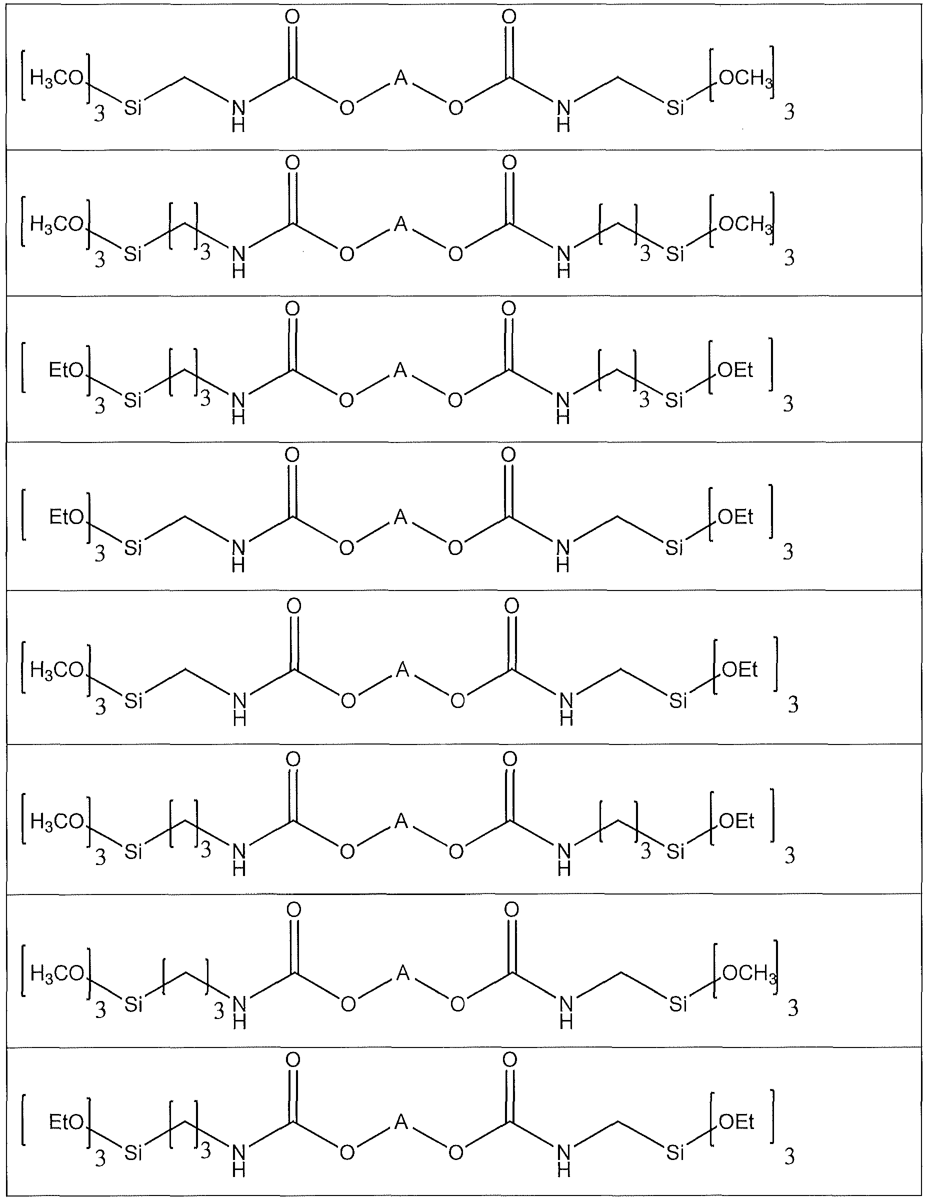 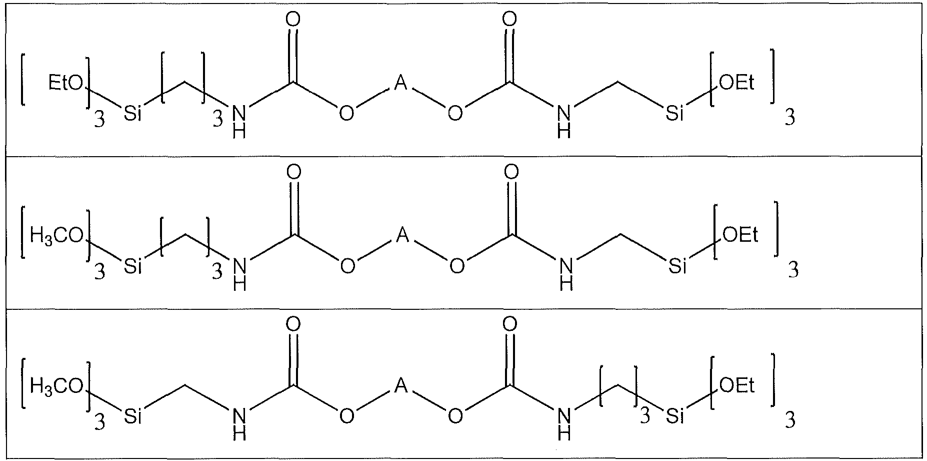 wobei A ein Polyether-Rückgrat gemäss der obigen Definition darstellt.

6. Verfahren gemäss Anspruch 1 oder 2, **dadurch gekennzeichnet, dass** das silanterminierte Polymer ein verzweigtes Polymer der allgemeinen Formel (IC) 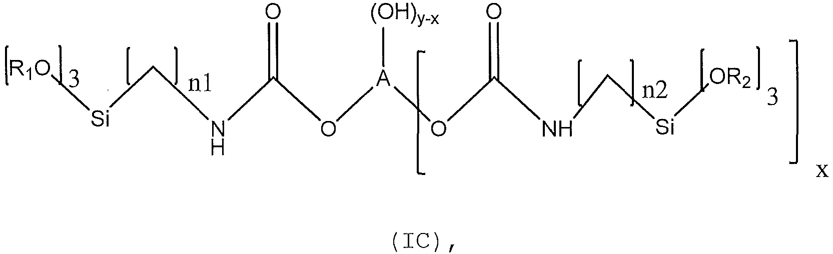 darstellt, wobei x und y jeweils einer natürlichen Zahl zwischen 2 und 10 entsprechen.

7. Verfahren gemäss Anspruch 6, **dadurch gekennzeichnet, dass** das silanterminierte Polymer der Formel (IC) im Wesentlichen frei von freien Hydroxylgruppen ist.

8. Verfahren gemäss einem der vorangehenden Ansprüche, **dadurch gekennzeichnet, dass** die Umsetzung mit einem Isocyanat ausgewählt aus der Gruppe bestehend aus 3-Isocyanatopropyltrimethoxysilan und 3-Isocyanatopropyltriethoxysilan erfolgt.

9. Verfahren gemäss einem der vorangehenden Ansprüche, **dadurch gekennzeichnet, dass** der Cobaltkatalysator ausgewählt ist aus der Gruppe bestehend aus Cobalt (II) hexafluoroacetylacetonat, Cobalt(II) benzoat, Cobalt(II) isopropoxid, Cobalt(II)acetylacetonat, Cobalt(II) oxalat, Cobalt(II)citrat, Cobalt(II) hydroxid, Cobalt(II) acetat, Cobalt(II)stearat, Bis(2,2,6,6-tetramethyl-3,5-heptandionato)cobalt (II), Cobalt(II) oleat, Cobalt (II) 2-ethylhexanoat, Cobalt (II) naphthenat, Cobalt (II) neodecanoat und Cobalt(II) resinat.

10. Verfahren gemäss einem der vorangehenden Ansprüche, **dadurch gekennzeichnet, dass** der Bismuthkatalysator ausgewählt ist aus der Gruppe bestehend aus Bismuth(III) isopropoxid, Bismuth(III) tert-pentoxid, Bismuth(III) oleate, Bismuth(III) 2-ethylhexanoat, Bismuth(III) neodecanoat und Bismuth(III)acetylacetanoat.

11. Verfahren gemäss einem der vorangehenden Ansprüche, **dadurch gekennzeichnet, dass** das hydroxyterminierte organische Polymer ein mittleres Molekulargewicht von 1'000-40'000g/mol, insbesondere 2'000-25'000g/mol aufweist.

12. Verfahren gemäss einem der vorangehenden Ansprüche, **dadurch gekennzeichnet, dass** der Gehalt des Cobaltkatalysators 2 bis 5 ppm bezogen auf das hydroxyterminierte organische Polymer der Formel (II) beträgt.

## Claims

1. A process for preparing a silane-terminated polymer of the formula (I) or (VI) 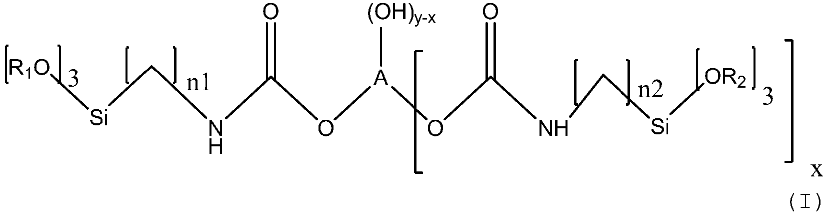 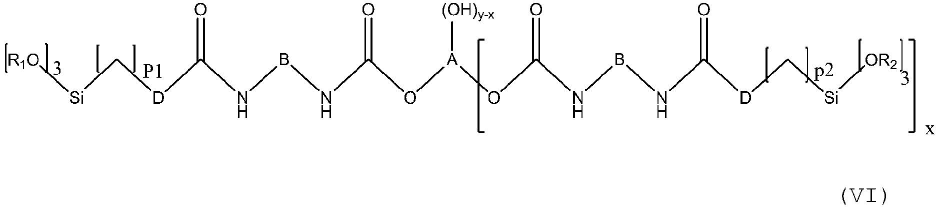 by reacting a hydroxy-terminated organic polymer of the formula (II) 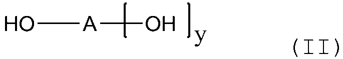 with at least one isocyanate of the general formula (III)
(RO)₃-Si-(CH₂)ₙ-N=C=O (III)
or
with a polyfunctional isocyanate of the formula (IV)
B-(N=C=O)ₘ (IV)
and subsequent reaction with an alkoxysilane of the formula (V)
(RO)₃Si-(CH₂)ₚ-D₁ (V)
in the presence of a catalyst mixture, wherein
A is a polyether backbone,
x and y are natural numbers from 1 to 10, where y must be greater than or equal to x,
n, n₁ and n₂ are 1 or 3,
p, p₁ and p₂ are a natural number from 1 to 5,
m is a natural number from 2 to 10, and
R, R₁ and R₂ are methyl or ethyl,
B is a linear, branched or cyclic organic radical which does not contain any isocyanate-reactive groups, and m is greater than 1,
D is selected from the group consisting of NH, NR₃ and S,
D₁ is a reactive group which reacts with the isocyanate group and is selected from the group consisting of NH₂, NHR₃ and SH, and
R₃ is a linear, branched or cyclic hydrocarbyl radical which has 1 to 10 carbon atoms and may optionally comprise one or more heteroatoms selected from the group consisting of oxygen, sulfur and nitrogen,
**characterized in that** the catalyst mixture contains a bismuth catalyst and a cobalt catalyst, and where the content of the cobalt catalyst is at least 2 ppm based on the hydroxy-terminated organic polymer of the formula (II).

2. The process as claimed in claim 1, **characterized in that** the content of the bismuth catalyst is at least 10 ppm based on the hydroxy-terminated organic polymer of the formula (II).

3. The process as claimed in any of the preceding claims, **characterized in that** the silane-terminated polymer is a linear polymer of the general formula IA

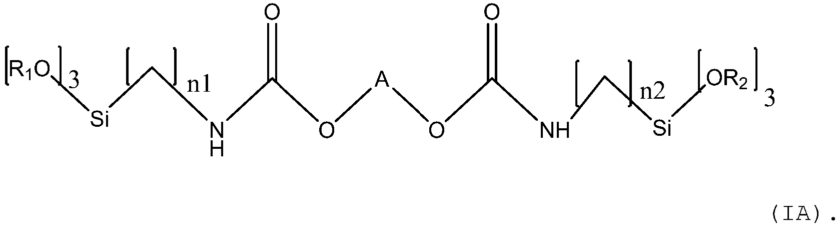

4. The process as claimed in any of the preceding claims, **characterized in that** the silane-terminated polymer is a linear polymer of the general formula IB

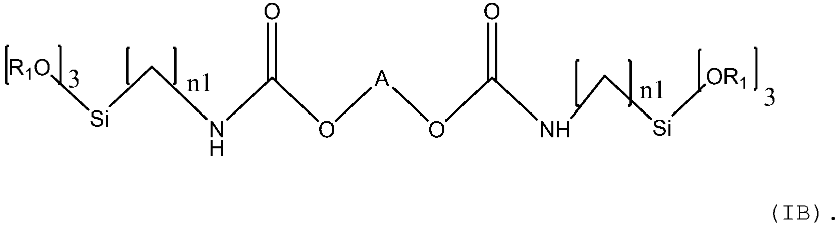

5. The process as claimed in either of claims 3 and 4, wherein the linear silane-terminated polymers are selected from the group consisting of 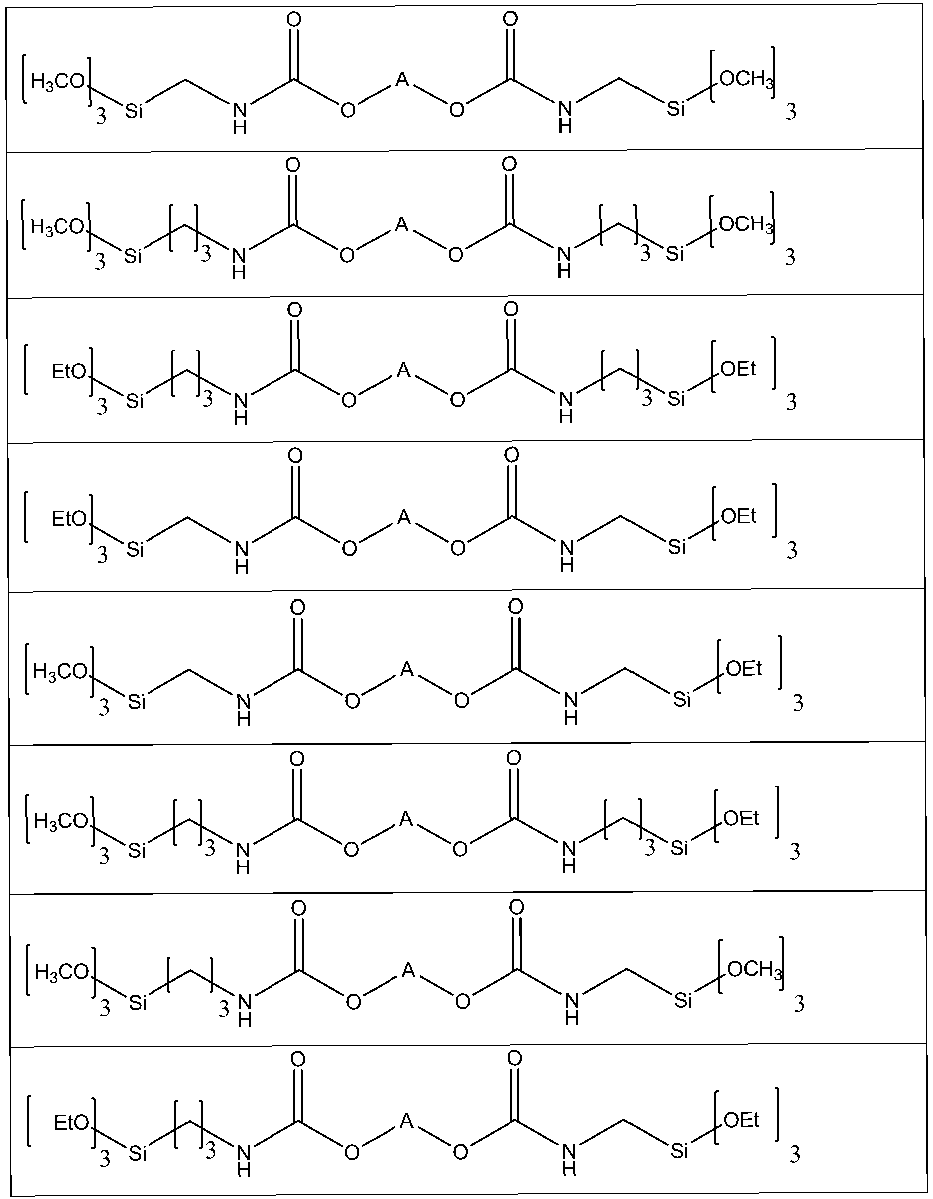 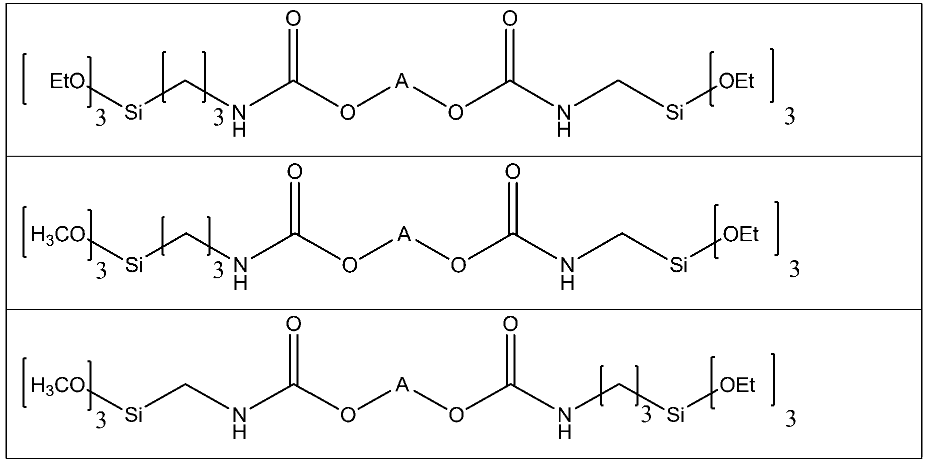 where A is a polyether backbone as defined above.

6. The process as claimed in claim 1 or 2, **characterized in that** the silane-terminated polymer is a branched polymer of the general formula (IC) 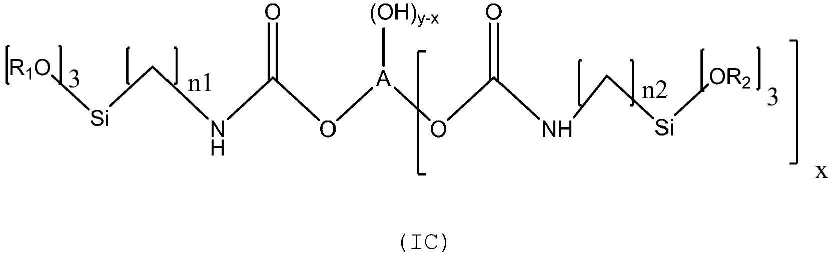 where x and y each correspond to a natural number from 2 to 10.

7. The process as claimed in claim 6, **characterized in that** the silane-terminated polymer of the formula (IC) is essentially free of free hydroxyl groups.

8. The process as claimed in any of the preceding claims, **characterized in that** the reaction is effected with an isocyanate selected from the group consisting of 3-isocyanatopropyltrimethoxysilane and 3-isocyanatopropyltriethoxysilane.

9. The process as claimed in any of the preceding claims, **characterized in that** the cobalt catalyst is selected from the group consisting of cobalt(II) hexafluoroacetylacetonate, cobalt(II) benzoate, cobalt(II) isopropoxide, cobalt(II) acetylacetonate, cobalt(II) oxalate, cobalt(II) citrate, cobalt(II) hydroxide, cobalt(II) acetate, cobalt(II)stearate, bis(2,2,6,6-tetramethyl-3,5-heptanedionato)cobalt(II), cobalt(II) oleate, cobalt (II) 2-ethylhexanoate, cobalt (II) naphthenate, cobalt (II) neodecanoate and cobalt(II) resinate.

10. The process as claimed in any of the preceding claims, **characterized in that** the bismuth catalyst is selected from the group consisting of bismuth(III) isopropoxide, bismuth(III) tert-pentoxide, bismuth(III) oleate, bismuth(III) 2-ethylhexanoate, bismuth(III) neodecanoate and bismuth(III) acetylacetanoate.

11. The process as claimed in any of the preceding claims, **characterized in that** the hydroxy-terminated organic polymer has an average molecular weight of 1000-40 000 g/mol, especially 2000-25 000 g/mol.

12. The process as claimed in any of the preceding claims, **characterized in that** the content of the cobalt catalyst is 2 to 5 ppm, based on the hydroxy-terminated organic polymer of the formula (II).

## Revendications

1. Procédé de préparation d'un polymère à terminaison silane de formule (I) ou (VI) 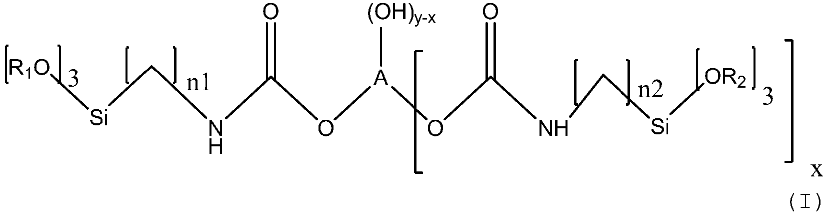 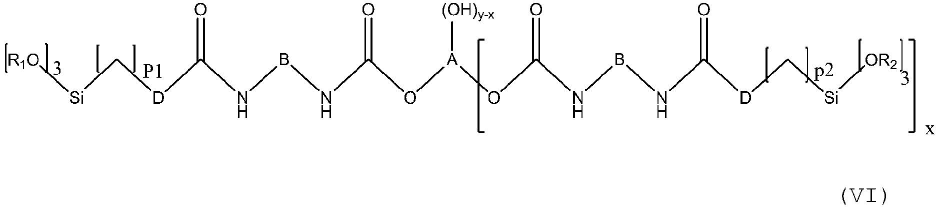 en faisant réagir un polymère organique à terminaison hydroxy de formule (II) 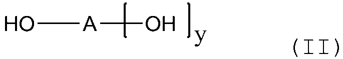 avec au moins un isocyanate de formule générale (III)
(RO)₃-Si-(CH₂)ₙ-N=C=O (III)
ou
avec un isocyanate polyfonctionnel de formule (IV)
B-(N=C=O)ₘ (IV)
et réaction ultérieure avec un alcoxysilane de formule (V)
(RO)₃Si-(_{CH2)})ₚ-D₁ (V)
en présence d'un mélange de catalyseurs, dans lequel
A représente un squelette polyéther,
x et y sont des nombres naturels compris entre 1 et 10, y devant être supérieur ou égal à x,
n, n₁ et n₂ sont égaux à 1 ou 3,
p, p₁ et p₂ sont des nombres naturels compris entre 1 et 5,
m est un nombre naturel compris entre 2 et 10, et
R, R₁ et R₂ représentent un groupe méthyle ou éthyle,
B est un radical organique linéaire, ramifié ou cyclique qui ne contient aucun groupe réactif avec les isocyanates, et m est supérieur à 1,
D est choisi parmi le groupe constitué de NH, NR₃ et S,
D₁ est un groupe réactif qui réagit avec le groupe isocyanate et est choisi parmi le groupe constitué de NH₂, NHR₃ et SH, et
R₃ est un radical hydrocarbyle linéaire, ramifié ou cyclique qui comporte 1 à 10 atomes de carbone et peut éventuellement comprendre un ou plusieurs hétéroatomes choisis parmi le groupe constitué de l'oxygène, du soufre et de l'azote,
**caractérisé en ce que** le mélange de catalyseurs contient un catalyseur au bismuth et un catalyseur au cobalt, et
où la teneur en catalyseur au cobalt est d'au moins 2 ppm par rapport au polymère organique à terminaison hydroxy de formule (II).

2. Procédé selon la revendication 1, **caractérisé en ce que** la teneur en catalyseur au bismuth est d'au moins 10 ppm par rapport au polymère organique à terminaison hydroxy de formule (II).

3. Procédé selon l'une quelconque des revendications précédentes, **caractérisé en ce que** le polymère à terminaison silane est un polymère linéaire de formule générale IA

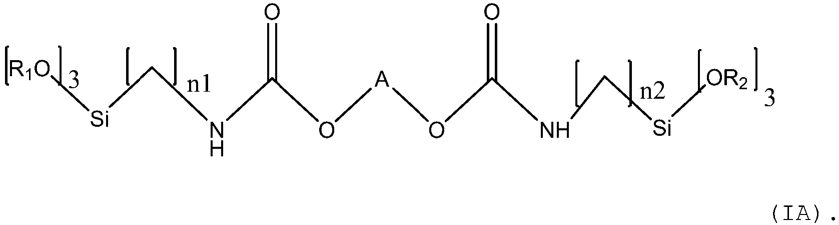

4. Procédé selon l'une quelconque des revendications précédentes, **caractérisé en ce que** le polymère à terminaison silane est un polymère linéaire de formule générale IB

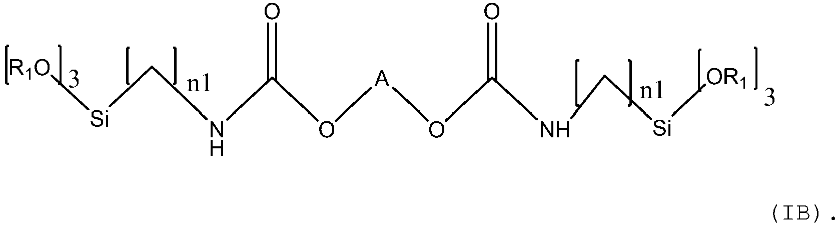

5. Procédé selon l'une des revendications 3 et 4, dans lequel les polymères linéaires à terminaison silane sont choisis dans le groupe constitué par 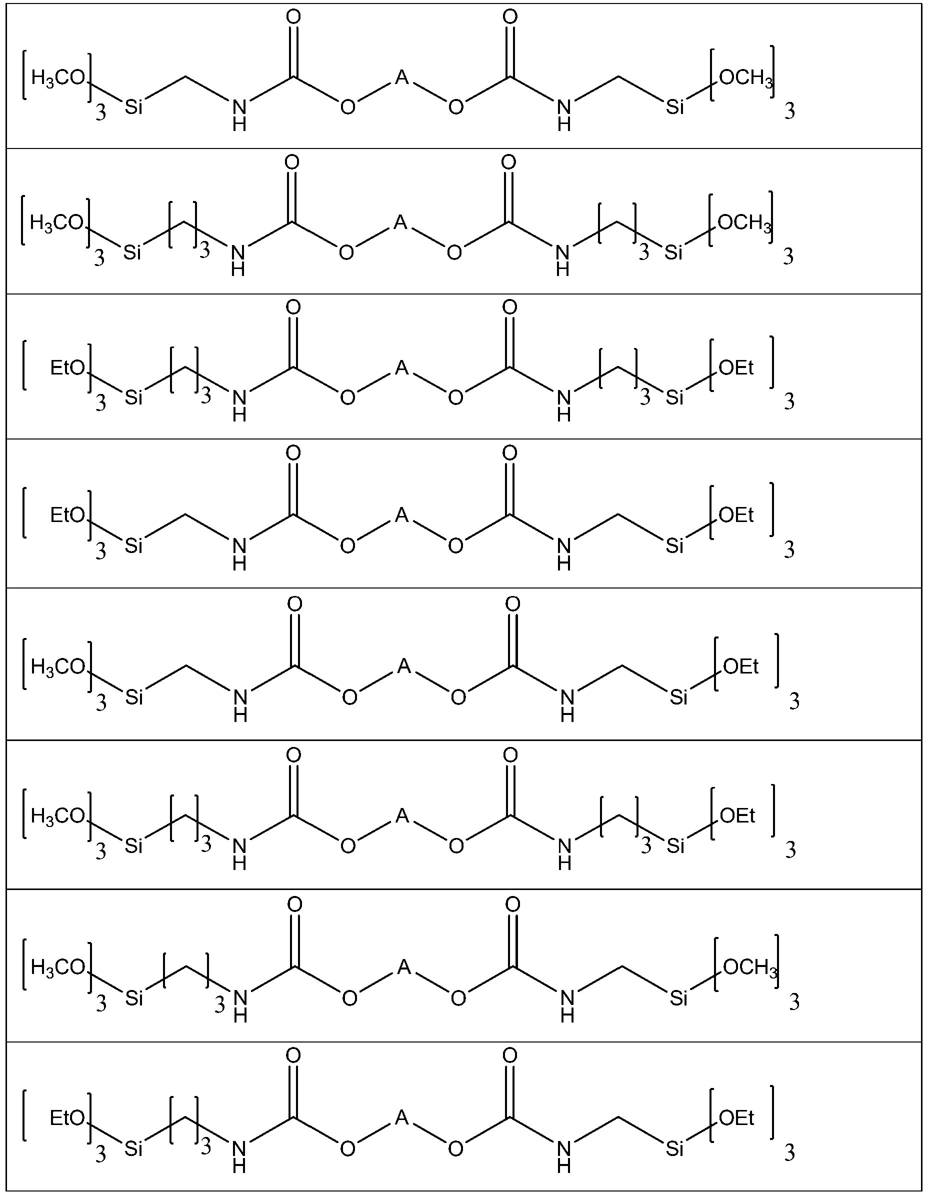 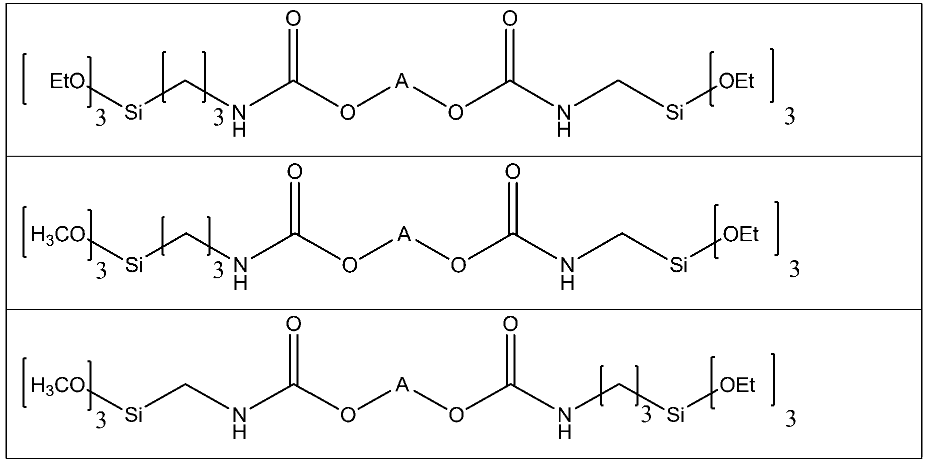 où A est un squelette polyéther tel que défini ci-dessus.

6. Procédé selon la revendication 1 ou 2, **caractérisé en ce que** le polymère à terminaison silane est un polymère ramifié de formule générale (IC) 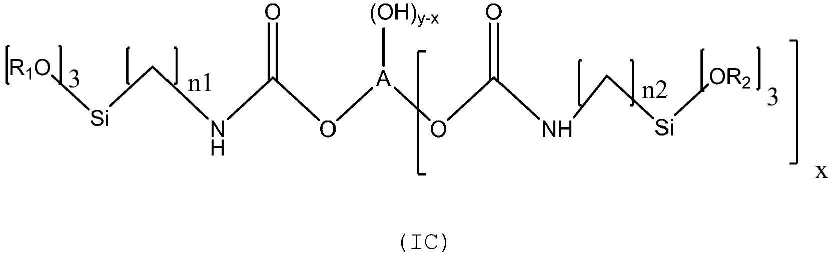 où x et y correspondent chacun à un nombre naturel compris entre 2 et 10.

7. Procédé selon la revendication 6, **caractérisé en ce que** le polymère à terminaison silane de formule (IC) est essentiellement exempt de groupes hydroxyle libres.

8. Procédé selon l'une quelconque des revendications précédentes, **caractérisé en ce que** la réaction est effectuée avec un isocyanate choisi dans le groupe constitué par le 3-isocyanatopropyltriméthoxysilane et le 3-isocyanatopropyltriéthoxysilane.

9. Procédé selon l'une quelconque des revendications précédentes, **caractérisé en ce que** le catalyseur au cobalt est choisi dans le groupe constitué par l'hexafluoroacétylacétonate de cobalt(II), le benzoate de cobalt(II), l'isopropoxyde de cobalt(II), l'acétylacétonate de cobalt(II), l'oxalate de cobalt(II), le citrate de cobalt(II), l'hydroxyde de cobalt(II), l'acétate de cobalt (II), le stéarate de cobalt (II), le bis(2,2,6,6-tétraméthyl-3,5-heptanedionato)cobalt (II), l'oléate de cobalt (II), le 2-éthylhexanoate de cobalt (II), le naphténate de cobalt (II), le néodécanoate de cobalt (II) et le résinate de cobalt (II).

10. Procédé selon l'une quelconque des revendications précédentes, **caractérisé en ce que** le catalyseur au bismuth est choisi dans le groupe constitué par l'isopropoxyde de bismuth(III), le tert-pentoxyde de bismuth(III), l'oléate de bismuth(III), le 2-éthylhexanoate de bismuth(III), le néodécanoate de bismuth(III) et l'acétylacétoate de bismuth(III).

11. Procédé selon l'une quelconque des revendications précédentes, **caractérisé en ce que** le polymère organique à terminaison hydroxy a un poids moléculaire moyen de 1 000 à 40 000 g/mol, en particulier de 2 000 à 25 000 g/mol.

12. Procédé selon l'une quelconque des revendications précédentes, **caractérisé en ce que** la teneur en catalyseur au cobalt est de 2 à 5 ppm, par rapport au polymère organique à terminaison hydroxy de formule (II).
